# EUROPÄISCHE PATENTSCHRIFT

(11) **EP 1 762 651 B1**
(45) Veröffentlichungstag und Bekanntmachung des Hinweises auf die Patenterteilung: **10.10.2012**
(21) Anmeldenummer: 06016292.2
(22) Anmeldetag: 04.08.2006
(51) Int. Cl.: D06F 95/00, D06F 39/00, G01G 19/56

(54) **Verfahren zum Aufteilen eines Wäschepostens**
Method of portioning a batch of laundry
Procédé pour partager un lot de linge

(30) Priorität: 06.09.2005 DE 102005042382
(43) Veröffentlichungstag der Anmeldung: 14.03.2007
(73) Patentinhaber: Herbert Kannegiesser GmbH, 32602 Vlotho (DE)
(72) Erfinder: Bringewatt, Wilhelm, 32457 Porta westfalica (DE); Engelbert, Heinz, 32602 Vlotho (DE)
(74) Vertreter: Möller, Friedrich

(56) Entgegenhaltungen:
- EP-A- 0 396 058
- EP-A- 1 437 436
- EP-A- 1 498 705
- DE-A1- 3 416 459
- DE-A1- 3 933 785
- DE-B3- 10 334 572

## Beschreibung

Die Erfindung betrifft ein Verfahren zum Aufteilen eines in einer Wäschereimaschine behandelten Postens an Wäsche gemäß dem Oberbegriff des Anspruchs 1 bzw. 2.

Vorrichtungen der hier angesprochenen Art werden üblicherweise in gewerblichen Wäschereien eingesetzt. Sie dienen dazu, die Wäsche entweder zu waschen und zu schleudern (Waschschleudermaschinen), nur zu schleudern (Wäschezentrifugen) oder zu trocknen (Wäschetrockner). Mit Wäsche sind nicht nur Bekleidungsstücke und Haushaltswäsche gemeint, sondern auch andere zu waschende Gegenstände, beispielsweise Fußmatten.

Aus der DE 103 34 572 B3, der DE 39 33 785 A1, der EP 1 498 705 A und der EP 0 396 058 A sind Haushaltswaschmaschinen bekannt, die mit Einrichtungen zum Wiegen des Gewichts der Wäsche versehen sind. Aufgrund des ermittelten Gewichts der in der Waschtrommel vorhandenen Wäsche erfolgt eine Auswahl des Waschprogramms oder eine Waschmitteldosierung.

Wäsche wird in Wäschereien unter anderem gewaschen, geschleudert und getrocknet. Dieses kann in separaten Wäschereimaschinen geschehen, nämlich in Waschmaschinen, Wäschezentrifugen und Wäschetrocknern. Die Wäsche ist dann von der Waschmaschine in die Wäschezentrifuge und nochmals von der Wäschezentrifuge in den Trockner umzuladen. Bei Waschschleudermaschinen findet das Waschen und Schleudern der Wäsche in der gleichen Wäschereimaschine statt. Dann ist ein Umladen der Wäsche von der Waschschleudermaschine in den Trockner erforderlich. Die genannten Wäschereimaschinen verfügen vielfach über unterschiedliche Aufnahmekapazitäten und/oder Taktzeiten. Es werden dadurch in den aufeinanderfolgenden Wäschereimaschinen unterschiedliche Mengen an Wäsche (Posten) behandelt. Beispielsweise kann eine Waschschleudermaschine oder auch eine Wäschezentrifuge eine größere Menge an Wäsche, also einen größeren Posten, aufnehmen als zum Beispiel ein Wäschetrockner. Die Taktzeit des Wäschetrockners ist aber dann üblicherweise geringer als die Taktzeit der Waschschleudermaschine oder Wäschezentrifuge. Um diese Unterschiede auszugleichen, ist es bekannt, eine sogenannten Postenteilung vorzunehmen. In der Regel wird der größere Posten in zwei gleich große Teilposten unterteilt. Es ist aber auch denkbar, den größeren Posten in mehr als zwei vorzugsweise auch gleich großen Teilposten zu unterteilen. Bisher wird die Postenteilung mehr oder weniger zufallsbedingt durchgeführt.

Aus der DE 34 16 459 A1 ist ein Endlosbeladeförderer für eine kontinuierliche Postenwaschstraße für gewerbliche Wäschereien bekannt. Der Endlosbeladeförderer ist mit einer Wiegevorrichtung versehen, womit der Endlosbeladeförderer einschließlich der darauf befindlichen Wäsche gewogen werden kann. Hiermit kann festgestellt werden, wie groß die Wäschemenge ist, womit eine Waschmaschine beladen wird. Es ist nicht vorgesehen, den bekannten Endlosbeladeförderer zum Aufteilen eines in einer Wäschereimaschine behandelten Wäschepostens einzusetzen.

Es ist Aufgabe der vorliegenden Erfindung, ein Verfahren zu schaffen, womit auf einfache Weise eine relativ exakte Postenteilung möglich ist.

Ein Verfahren zur Lösung dieser Aufgabe weist die Maßnahme des Anspruchs 1 auf. Demnach ist vorgesehen, das Gewicht der Wäsche in der Wäschereimaschine zu ermitteln. Es ist somit das Gewicht der Wäsche in mindestens einer Wäschereimaschine bekannt, wodurch eine gezielte Postenteilung erfolgen kann. Das Gewicht der Wäsche wird in der jeweiligen Wäschereimaschine vor oder zu Beginn und während des Entladens der Wäsche aus der Wäschereimaschine ermittelt. Es findet zweckmäßigerweise eine fortlaufende Ermittlung des Gewichts der Wäsche in der jeweiligen Wäschereimaschine statt. Unter fortlaufender Gewichtsermittlung wird eine solche verstanden, die ständig, also lückenlos, erfolgt oder in aufeinanderfolgenden Zeitabständen, so dass zwischen den einzelnen Gewichtsmessungen vorzugsweise gleich große Pausen liegen, in denen keine Gewichtsmessung erfolgt. Die sich zum Zeitpunkt der jeweiligen Gewichtsermittlung in der Trommel befindende Wäschemenge, nämlich das Gewicht derselben, ist so einfach feststellbar. Durch die Gewichtsmessung vor oder zu Beginn des Entladens der Wäsche ist das Gesamtgewicht des Postens der Wäsche feststellbar. Durch die nachfolgenden Gewichtsmessungen ist feststellbar, welche Restmenge an Wäsche zum Zeitpunkt der jeweiligen Gewichtsermittlung sich noch in der Wäschereimaschine befindet. Dementsprechend kann das Gewicht des bereits aus der Wäschereimaschine entladenen Teilpostens der Wäsche zuverlässig bestimmt werden. Es wird das Gewicht des entladenen Teilpostens ermittelt, indem vom anfänglich ermittelten Gesamtgewicht des Postens der Wäsche in der Wäschereimaschine das Gewicht der sich noch in der Wäschereimaschine befindenden Wäsche abgezogen wird. Es ist so auf einfache Weise durch zeitlich aufeinanderfolgende Messungen an der jeweiligen Wäschereimaschine das exakte Gewicht des bereits entladenen Teilpostens ermittelbar. Der Entladevorgang wird momentan gestoppt, wenn der bereits entladene Teilposten das vorgesehene Gewicht erreicht hat. Üblicherweise handelt es sich dabei um das Gesamtgewicht des Postens dividiert durch die Anzahl der Teilposten. Die einzelnen Teilposten werden dann gebildet, indem nach einer auf die Bildung des ersten Teilpostens folgenden Entladepause der Entladevorgang fortgesetzt wird, wobei die entsprechende Anzahl der Teilposten mit vorzugsweise gleichen Wäschemengen, nämlich Gewichten, entsteht.

Ein weiteres Verfahren zur Lösung der eingangs genannten Aufgabe weist die Maßnahmen des Anspruchs 2 auf. Wenn nur zwei etwa gleich schwere Teilposten gebildet werden sollen, wird nur eine solche Menge von Wäsche entladen, bis das Gewicht der in der Wäschereimaschine verbleibenden Wäsche der Hälfte des zuvor festgestellten Gewichts des gesamten Postens der Wäsche entspricht. Hierdurch kann unmittelbar eine Postenteilung in zwei Posten mit etwa gleichem Gewicht vorgenommen werden.

Gemäß einer bevorzugten Weiterbildung des Verfahrens ist vorgesehen, die Wäsche aus der Wäschereimaschine auf einen Förderer zu laden. Dabei kann es sich zum Beispiel um ein Entladeband handeln. Nachdem der jeweilige Teilposten gebildet ist, kann dieser von der Wäschereimaschine weggefördert werden, so dass der nächste Teilposten gebildet werden kann, der vom vorangehenden Teilposten getrennt ist.

Es ist des Weiteren vorgesehen, den ersten Teilposten vom Förderer unmittelbar zur nachfolgenden Wäschereimaschine zu transportieren, wobei der oder jeder folgende Teilposten auf dem Förderer zwischengelagert, also gespeichert, wird, bis die nachfolgende Wäschereimaschine frei ist zur Aufnahme des nächsten Teilpostens. Durch dieses Zwischenspeichern der Teilposten kann die vorausgehende Wäschereimaschine vollständig entladen werden, ohne dass eine Abhängigkeit zur Taktzeit und zur Aufnahmekapazität der folgenden Wäschereimaschine besteht. Die Wäschereimaschinen können auf diese Weise unabhängig voneinander betrieben werden.

Ein bevorzugtes Ausführungsbeispiel der Erfindung wird nachfolgend anhand der Zeichnung näher erläutert. In dieser zeigen:
- Fig. 1: eine prinzipielle Seitenansicht der Vorrichtung zusammen mit einem nachfolgenden Entladeband und einem von diesem beladbaren Trockner,
- Fig. 2: eine Vorderansicht der Vorrichtung der Fig. 1, und
- Fig. 3: eine vergrößerte Einzelheit III aus der Fig. 2, im Bereich eines Fußes eines Grundrahmens der Vorrichtung.

Die Figuren zeigen eine Vorrichtung, die als Waschschleudermaschine 10 zum Einsatz in insbesondere gewerblichen Wäschereien ausgebildet ist.

Die Waschschleudermaschine 10 verfügt über eine um eine verschwenkbare Drehachse 11 drehend antreibbare Trommel 12, die durch mindestens teilweise Perforationen in ihrer Mantelfläche flüssigkeitsdurchlässig ist. Die Trommel 12 weist an ihrer freien Stirnseite eine einzige im Wesentlichen vollflächige Öffnung 13 auf.

Die Waschschleudermaschine 10 verfügt des Weiteren über ein die wasserdurchlässige Trommel 12 umgebendes, wasserdichtes Trommelgehäuse 14. Das Trommelgehäuse 14 ist relativ zur Trommel 12 feststehend ausgebildet, also im Gegensatz zur Trommel 12 nicht drehend antreibbar. Auch das Trommelgehäuse 14 weist an einer freien Stirnseite eine einzige nahezu vollflächige Öffnung 15 auf. Die Öffnung 15 ist derjenigen Stirnseite des Trommelgehäuses 14 zugeordnet, zu der auch die Öffnung 13 der Trommel 12 weist. Die Öffnungen 13 und 15 liegen dadurch benachbart zueinander, indem sie miteinander korrespondieren. Bei der hier gezeigten Waschschleudermaschine 10 ist die Öffnung 15 des Trommelgehäuses 14 durch eine schwenkbare Tür 16 verschließbar.

Das Trommelgehäuse 14 mit der darin drehend gelagerten Trommel 12 ist um eine quer zur Drehachse 11 der Trommel 12 verlaufende Schwenkachse 17 verschwenkbar. Die Schwenkachse 17 verläuft horizontal, so dass zum Be- und Entladen die Trommel 12 mit dem Trommelgehäuse 14 so verschwenkt werden kann, dass die Öffnungen 13 und 15 mindestens leicht geneigt nach oben weisen (Beladestellung) oder schräg nach unten gerichtet sind (Entladestellung). Zum Betrieb der Waschschleudermaschine 10 kann die Trommel 12 mit dem Trommelgehäuse 14 in eine Waschstellung geschwenkt sein, in der die Drehachse 11 der Trommel 12 horizontal, geneigt oder auch senkrecht verläuft.

Das Trommelgehäuse 14 ist mit der Schwenkachse 17 an einem Grundrahmen 18 der Waschschleudermaschine 10 gelagert. An einer Unterseite 21 des Grundrahmens 18 sind bei der gezeigten Waschschleudermaschine 10 vier vorzugsweise gleich ausgebildete Füße 19 angeordnet. Mit den Füßen 19 steht die Waschschleudermaschine 10 auf dem Boden einer Wäscherei.

Einzelheiten der Lagerung des Trommelgehäuses 14 am Grundrahmen 18 und der Antriebe zum Verschwenken des Trommelgehäuses 14 gegenüber dem Grundrahmen 18 und zum drehenden Antrieb der Trommel 12 sind an sich bekannt, beispielsweise aus der DE 103 43 306 A1 im Zusammenhang mit einer Wäschezentrifuge und der DE 10 2004 002 585 A1 im Zusammenhang mit einer Waschschleudermaschine. Insofern wird hierauf Bezug genommen.

Die hier gezeigte Waschschleudermaschine 10 ist mit mindestens einem Gewichtsaufnehmer 20 versehen. Dadurch wird die Waschschleudermaschine 10 gewogen. Aufgrund dieser Wägung ist das Gewicht des inhalts der Trommel 12 ermittelbar. Durch mehrere in regelmäßigen Zeitabständen aufeinanderfolgende oder ständige, lückenlose Gewichtsmessungen sind zeitliche Veränderungen des Gewichts der trockenen oder noch feuchten Wäsche in der Trommel 12, wie sie beispielsweise beim Entladen auftreten, feststellbar. Aber auch dynamische Kräfte, die beim drehenden Antrieb der Trommel 12, insbesondere der beladenen Trommel 12, auftreten, sind so ermittelbar. Der mindestens eine Gewichtsaufnehmer 20 ist vorzugsweise dem Grundrahmen 18 zugeordnet. Der Gewichtsaufnehmer 20 ist bevorzugt im Bereich der Unterseite 21 des Grundrahmens 18 angeordnet, und zwar hier zwischen dem Grundrahmen 18 und dem jeweiligen Fuß 19.

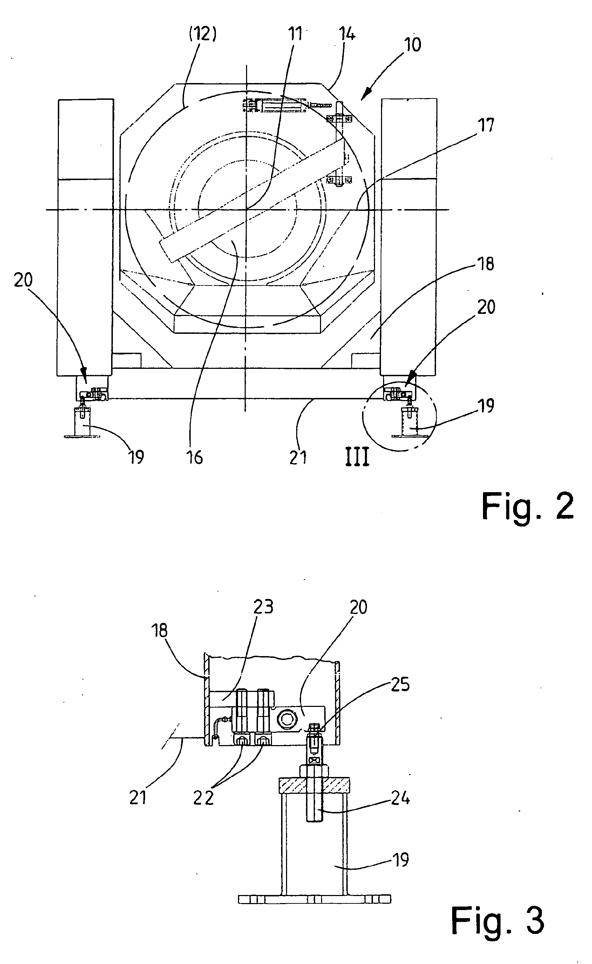

Im gezeigten Ausführungsbeispiel sind vier Gewichtsaufnehmer 20 vorgesehen. Es handelt sich hierbei um gleiche Gewichtsaufnehmer 20. Die Gewichtsaufnehmer 20 sind in einem unteren Bereich des Grundrahmens 20 eingebaut, und zwar so, dass sich jeweils ein Gewichtsaufnehmer 20 auf einem der vier Füße 10 abstützt (Fig. 2 und 3). Es ist aus den Figuren ersichtlich, dass die Gewichtsaufnehmer 20 innerhalb der Umrisslinien des Grundrahmens 18 angeordnet sind, und zwar in der Nähe der Unterseite 21 des Grundrahmens 18. Dadurch liegen die Gewichtsaufnehmer 20 insbesondere beim Transport der Waschschleudermaschine 10 geschützt im Inneren des im Bereich der Gewichtsaufnehmer 20 hohlen Grundrahmens 18. Außerdem ist es so möglich, die Gewichtsaufnehmer 20 den Füßen 19 zuzuordnen, indem sich jeder der vier Gewichtsaufnehmer 20 auf einem der ebenfalls vier Füße 19 abstützt (Fig. 3). Die fest im unteren Bereich mit dem Grundrahmen 18 verbundenen Gewichtsaufnehmer 20 werden so vom nahezu gesamten Gewicht der Waschschleudermaschine 10, nämlich des Grundrahmens 18, des Trommelgehäuses 14 und der Trommel 12 mit ihrem Inhalt, beaufschlagt.

Es ist vorzugsweise vorgesehen, dass die Verkleidung und der mindestens eine Schaltschrank vom Grundrahmen 18 getrennt sind. Dadurch werden Störeinflüsse, die auf das Ergebnis der Messung der Gewichtsaufnehmer 20 einwirken könnten, vermieden, und zwar ebenso wie flexible Medienzuführungen.

Bei der hier gezeigten Waschschleudermaschine 10 ist jeder Gewichtsaufnehmer 20 als eine Scherstab-Wägezelle ausgebildet. Je nach Größe der Waschschleudermaschine 10 weist die Scherstab-Wägezelle einen entsprechenden Messbereich auf. In der Regel reicht eine Scherstab-Wägezelle, die Gewichte bis zu 5 t ermitteln kann. Jede der Scherstab-Wägezellen ist vorzugsweise nach der 6-Leiter-Technik ausgebildet und mit einem Messverstärker versehen. Es ist aber auch denkbar, einen Messverstärker für alle vier Gewichtsaufnehmer 20, nämlich Scherstab-Wägezellen, vorzusehen. Auf den oder die Messverstärker folgt eine übliche Mess-, Auswert- und Anzeigeelektronik. Zweckmäßigerweise ist auch ein Rechner vorgesehen, der die Messsignale der Gewichtsaufnehmer 20 verarbeitet, umrechnet und gegebenenfalls auch speichert. Letzteres ist insbesondere zweckmäßig, wenn gemäß einem bevorzugten Ausführungsbeispiel der Erfindung die Gewichtsaufnehmer 20 aufeinanderfolgende Messsignale liefern, und zwar in lückenlosen Abständen oder mit zeitlichem Abstand, wobei im letztgenannten Falle zweckmäßigerweise die Pausen zwischen aufeinanderfolgenden Messungen gleich groß sind.

Die Scherstab-Wägezellen sind an einem Ende fest mit dem Grundrahmen 18 verbunden. Im gezeigten Ausführungsbeispiel ist etwa eine Hälfte jeder Scherstab-Wägezelle durch mehrere Schrauben 22 mit einer Traverse 23, die fest mit dem Grundrahmen 18 verbunden ist, verschraubt. Die somit lösbare Verbindung der Scherstab-Wägezelle mit dem Grundrahmen 18 erfolgt so, dass der längliche Scherstab horizontal gerichtet sich im Grundrahmen 18 befindet, wobei eine zweite Hälfte der länglichen Scherstab-Wägezelle gegenüber der horizontalen Traverse 23 des Grundrahmens 18 frei auskragend vorsteht (Fig. 3). Die Unterseite des frei gegenüber der Traverse 23 des Grundrahmens 18 vorstehenden Teils der Scherstab-Wägezelle liegt mit einem äußeren Endbereich auf dem jeweiligen Fuß 19 auf. Dazu weist jeder Fuß 19 eine Gewindestange 24 oder auch eine Schraube auf. Die Gewindestange 24 ist in den Fuß 19 eingeschraubt und mit einem oberen freien Ende 25 in Kontakt mit dem frei auskragenden Ende der Scherstab-Wägezelle (Gewichtsaufnehmer 20) gebracht. Gegebenenfalls kann das Ende 25 der Gewindestange 24 in einer entsprechenden Vertiefung der Scherstab-Wägezelle befestigt sein, beispielsweise durch Festschrauben. Die Gewindestange 24 ist zum Zwecke der horizontalen Ausrichtung der Waschschleudermaschine 10 mehr oder weniger weit in den Fuß 19 einschraubbar, so dass das freie Ende 25 der Gewindestange 24 einen entsprechenden Abstand zur Oberseite des Fußes 19 aufweist.

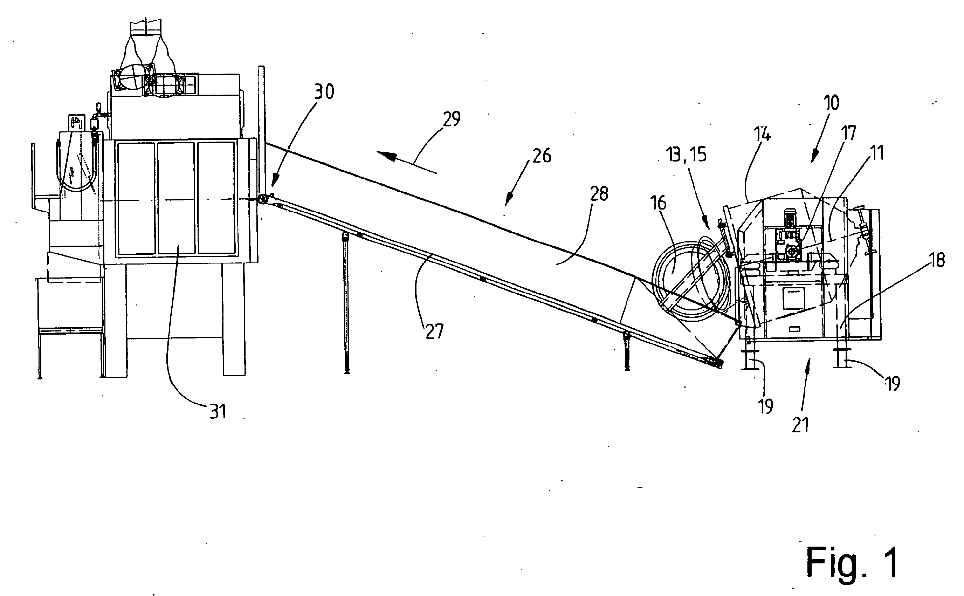

Aus der Fig. 1 geht hervor, dass der Waschschleudermaschine 10 auf der Entladeseite ein Entladeband 26 zugeordnet ist. Hierbei handelt es sich im einfachsten Falle um ein Förderband. Gegenüberliegenden Seiten des Obertrums 27 des Entladebands 26 sind vorzugsweise feststehende Führungswände 28 zugeordnet, wodurch das Entladeband 26 rinnenartig ausgebildet ist zur seitlichen Führung der auf dem Entladeband 26 weitertransportierten Wäsche. Das hier gezeigte Entladeband 26 steigt in Förderrichtung 29 leicht an. Das Entladeband 26 kann aber auch horizontal oder leicht geneigt verlaufen. Dem Ende 30 des Entladebands 26 ist ein Trockner 31 zugeordnet. Auf diese Weise kann die Wäsche aus der Waschschleudermaschine 10 über das Entladeband 26 in den Trockner 31 transportiert werden zum Beladen des Trockners 31 mit der aus der Waschschleudermaschine 10 kommenden Wäsche.

Das erfindungsgemäße Verfahren wird nachfolgend anhand der vorstehend beschriebenen Waschschleudermaschine 10 näher erläutert:

Die Gewichtsaufnehmer 20 ermitteln fortlaufend, und zwar entweder in einer lückenlosen Aufeinanderfolge oder in regelmäßigen mit bestimmten, vorzugsweise gleichlangen, Pausen aufeinanderfolgenden Zeitabständen das Gewicht desjenigen Teils der Waschschleudermaschine 10, der auf den Füßen 19 und damit auf den zwischen der Waschschleudermaschine 10 und den Füßen 19 angeordneten Gewichtsaufnehmern 20 ruht. Es werden dabei ständig oder von Zeit zu Zeit die Trommel 12 mit ihrem Inhalt, das Trommelgehäuse 14, der Grundrahmen 18 und die mit den genannten Komponenten der Waschschleudermaschine 10 verbundenen Teile, insbesondere Antriebe, gewogen. Da dieses Gewicht abgesehen von dynamischen Kräften stets konstant ist, kann das Gewicht des Inhalts der Trommel 12 durch Subtraktion vom Leergewicht der auf dem Gewichtsaufnehmer 20 ruhenden Komponenten der Waschschleudermaschine 10 ermittelt werden.

Das Gewicht des Inhalts der Trommel 12 lässt sich durch die Gewichtsaufnehmer 20 auch bei drehendem Antrieb der Trommel 12 ermitteln, wenn durch den Antrieb der beladenen Trommel 12 gegebenenfalls entstehende dynamische Kräfte hinzukommen. Weil die dynamischen Kräfte periodischer Natur sind und die Gewichtsmessungen über die Zeit fortlaufend erfolgen, führen die dynamischen Kräfte abwechselnd zur Erhöhung und zur Verringerung des von den Gewichtsaufnehmern 20 ermittelten Gewichts der Waschschleudermaschine 10, einschließlich des Inhalts der Trommel 12. Ein Mittelwert der periodisch schwankenden Gewichtsmesswerte führt zum Gewicht des Inhalts der Trommel 12 ohne Berücksichtigung dynamischer Kraftkomponenten. Das erfindungsgemäße Verfahren ermöglicht es so, das Gewicht bzw. die Gewichtskraft des Inhalts der Trommel 12 sowohl bei stehender als auch bei drehend angetriebener Trommel 12 zu ermitteln.

Vielfach nimmt der auf die Waschschleudermaschine 10 folgende Trockner 31 nur einen Teil des Wäschepostens in der Waschschleudermaschine 10 auf. Im Folgenden wird davon ausgegangen, dass der Trockner 31 nur die Hälfte des Wäschepostens der Waschschleudermaschine 10 aufnimmt. Die Zeit, die der Trockner 31 benötigt, um die Wäsche zu trocknen, nämlich die Restfeuchte wenigstens größtenteils aus der Wäsche zu entfernen, ist jedoch kleiner als die Taktzeit der Waschschleudermaschine 10, also die Zeit, die diese zum Waschen und Schleudern der Wäsche benötigt. Im Folgenden wird davon ausgegangen, dass die Taktzeit des Trockners 31 nur der halben Taktzeit der Waschschleudermaschine 10 entspricht.

Aufgrund unterschiedlicher Aufnahmekapazitäten und Taktdauern der Waschschleudermaschine 10 und des Trockners 31 ist es üblich, eine sogenannte Postenteilung vorzunehmen. Dazu wird der Posten der Wäsche in der Waschschleudermaschine 10 beim Entladen derselben aufgeteilt. Im hier angenommenen Fall, dass die Aufnahmekapazität des Trockners 31 halb so groß ist wie diejenige der Waschschleudermaschine 10, wird der Posten der Wäsche in der Waschschleudermaschine 10 geteilt in zwei gleich große Teilposten, nämlich im hier angenommenen Beispiel Postenhälften. Es findet dann also eine gleichmäßige Postenteilung statt. Diese Postenteilung wird unterstützt durch die fortlaufende Feststellung des Gewichts der auf den Gewichtsaufnehmern 20 ruhenden wesentlichen Teile der Waschschleudermaschine 10 einschließlich der eine bestimmte Restfeuchte aufweisenden Wäsche in der Trommel 12. Aufgrund des bekannten Gewichts der auf den Gewichtsaufnehmern 20 ruhenden Komponenten der Waschschleudermaschine 10 ist das Gewicht des gesamten sich in der Trommel 12 befindenden Postens der noch eine Restfeuchte aufweisenden Wäsche zu bzw. vor Beginn der Entladung bekannt.

Bei einer Aufteilung des Postens in zwei etwa gleich große bzw. gleich schwere Teilposten wird die Waschschleudermaschine 10 allmählich entladen, wobei die entladende, noch eine Restfeuchte aufweisende Wäsche auf das Entladeband 26 gelangt. Durch die über einen gewissen Zeitraum hinweg periodische oder ständige Gewichtsmessung ist ermittelbar, wann die halbe Menge der noch eine Restfeuchte aufweisenden Wäsche die Trommel 12 der Waschschleudermaschine 10 verlassen hat. Es befindet sich dann auf dem Entladeband 26 ein Teilposten, der etwa dem halben Gewicht des Postens der Wäsche in der Waschschleudermaschine 10 entspricht. Der Entladevorgang der Waschschleudermaschine 10 wird nun kurzfristig unterbrochen. Während der Entladung des ersten Teilpostens wird dieser vom Entladeband 26 kontinuierlich oder auch taktweise in den Trockner 31 transportiert und dieser somit beladen, wenn er zu diesem Zeitpunkt frei ist. Nunmehr kann der Trocknungsvorgang des ersten Teilpostens im Trockner 31 beginnen. Es wird anschließend die restliche noch eine Restfeuchte aufweisende Wäsche aus der Trommel 12 der Waschschleudermaschine 10 entladen. Diese restliche Wäsche entspricht dem zweiten Teilposten mit etwa dem gleichen Gewicht des ersten Teilpostens. Dieser Teilposten verbleibt auf dem Entladeband 26, bis der erste Teilposten getrocknet ist. Danach wird der zweite Teilposten vom Entladeband 26 in den Trockner 31 transportiert und damit eine Beladung des Trockners 31 mit dem zweiten Teilposten vorgenommen.

Wenn der Trockner 31 sich während des Entladens des ersten Teilpostens noch im Betrieb befindet, also noch nicht aufnahmefähig für den Teilposten ist, wird der erste Teilposten aus der Waschschleudermaschine 10 auf das stillstehende Entladeband 26 entladen. Der erste Teilposten wird dann im Haufen auf dem Entladeband 26 abgelegt. Sobald der erste Teilposten gebildet ist, wird das Entladen der Waschschleudermaschine 10 kurzfristig unterbrochen und der Antrieb des Entladebandes 26 kurz gestartet. Dadurch wird der erste Teilposten vom Entladeband 26 vor den Trockner 31 gefördert. Es kann dann der zweite Teilposten gebildet werden durch vollständiges Entladen der Waschschleudermaschine 10, wobei die Teilposten sich voneinander getrennt auf dem Entladeband 26 befinden. Sobald der Trockner 31 wieder aufnahmefähig ist, wird der erste Teilposten vom Entladeband 26 in den Trockner 31 geladen. Der nachfolgende, zweite Teilposten verbleibt noch auf dem Entladeband 26, bis der erste Teilposten getrocknet ist und der Trockner 31 aufnahmefähig für den zweiten Teilposten ist.

Sollen mehr als zwei Teilposten der in der Waschschleudermaschine 10 enthaltenen Wäsche gebildet werden, weil der Trockner weniger als die Hälfte des Postens der Wäsche in der Waschschleudermaschine 10 aufnehmen kann, wird eine entsprechende Anzahl gleich großer Teilposten gebildet. Sollen beispielsweise drei gleich große Teilposten gebildet werden, wird wiederum ausgegangen vom vor oder zu Beginn des Entladens der Waschschleudermaschine 10 festgestellten Gesamtgewichts des Postens der noch eine Restfeuchte aufweisenden Wäsche in der Trommel 12. Nun wird der erste Teilposten gebildet, indem vom Gesamtgewicht des Postens der Wäsche das Gewicht des Teilpostens, im vorliegenden Beispielsfall ⅓ des Gesamtgewichts des Postens, abgezogen wird. Dann wird die noch eine Restfeuchte aufweisende Wäsche so lange aus der Waschschleudermaschine 10 entladen, bis die fortlaufende Gewichtsmessung feststellt, dass nur noch ²/₃ des Gesamtgewichts des Postens an noch Restfeuchtigkeit aufweisender Wäsche in der Trommel 12 vorhanden ist. Nun ist die Bildung des ersten Teilpostens abgeschlossen. Analog wird der zweite Teilposten gebildet, indem das Entladen der Trommel 12 solange fortgesetzt wird, bis in dieser nur noch ⅓ des Gesamtgewichts des gesamten Postens der noch feuchten Wäsche enthalten ist. Der dritte Teilposten wird gebildet, indem die gesamte restliche Wäsche aus der Trommel 12 entladen wird. Die Teilposten werden mit Abstand voneinander auf dem Entladeband 26 abgelegt. Dazu erfolgt während des Entladens der Trommel 12 der Waschschleudermaschine 10, also während der Bildung des jeweiligen Teilpostens, kein Antrieb des Entladebands 26. Nachdem der jeweilige Teilposten gebildet ist und der Entladevorgang der Waschschleudermaschine 10 kurzfristig unterbrochen wird, erfolgt ein momentaner Antrieb des Entladebands 26. Auf diese Weise werden die einzelnen Teilposten auf dem Entladeband 26 getrennt und vorzugsweise auch etwas voneinander beabstandet. Immer dann, wenn der Trockner 31 zur Aufnahme eines neuen Teilpostens bereit ist, wird jeweils ein Teilposten vom Entladeband 26 zum Trockner 31 transportiert und dabei der Trockner 31 beladen.

Die Erfindung eignet sich auch im Zusammenhang mit dem Be- und Entladen anderer Wäschereimaschinen, beispielsweise Wäschezentrifugen. Auch hier erfolgt die Postenbildung, also die gezielt gewichtsmäßige Aufteilung eines (großen) Postens in zwei oder auch mehr als zwei Teilposten durch ständiges oder periodisches Wiegen mindestens eines Teils der den jeweiligen Posten oder einen Rest desselben enthaltenden Wäschereimaschine.

Erfolgt das Waschen und Schleudern der Wäsche nicht in einer Waschschleudermaschine 10, sondern in getrennten Wäschereimaschinen, nämlich einer Waschmaschine und einer darauf folgenden Wäschezentrifuge, findet die zuvor beschriebene Postenbildung beim Entladen der Wäschezentrifuge statt. Auch hier wird das Gewicht der sich in der Trommel der Wäschezentrifuge befindenden geschleuderten Wäsche mit einer gewissen Restfeuchte zu Anfang oder vor dem Entladen ermittelt, wodurch das Gesamtgewicht des Postens der Wäsche in der Trommel der Wäschezentrifuge bekannt ist. Durch eine fortlaufende, ununterbrochene oder durch regelmäßige Pausen unterbrochene Gewichtsmessung mindestens der noch eine Restfeuchte aufweisenden Wäsche in der Trommel erfolgt dann eine gezielte Bildung zweier oder auch mehrerer Teilposten aus dem Gesamtposten der Wäsche in der Trommel der Wäschezentrifuge. Der Abtransport der Teilposten vom Entladeband 26 erfolgt auf gleiche Weise wie zuvor im Zusammenhang mit der Waschschleudermaschine 10 beschrieben.

Wenn die auf die Waschmaschine folgende Wäschezentrifuge eine geringere Aufnahmekapazität als die Waschmaschine hat und sich gegebenenfalls auch die Taktzeiten unterscheiden, kann die erfindungsgemäße Postenteilung auch zwischen der Waschmaschine und der Wäschezentrifuge erfolgen, also beim Entladen der Waschmaschine. Dabei wird genauso vorgegangen und das Entladeband genauso angetrieben, wie zuvor im Zusammenhang mit der Waschschleudermaschine 10 beschrieben.

Schließlich kann auch eine Postenteilung beim Entladen des Trockners 31 erfolgen. Dabei braucht dem Trockner 31 kein Entladeband 26 nachgeordnet zu sein.

Denkbar ist es auch, zum Entladen der Waschschleudermaschine 10, der Wäschezentrifuge, der Waschmaschine und/oder des Trockners 31 an der Stelle des Entladebands 26 ein anderes Fördermittel vorzusehen, beispielsweise Wäschewagen, pneumatische Förderer oder dergleichen.

### Bezugszeichenliste:

- 10: Waschschleudermaschine
- 11: Drehachse
- 12: Trommel
- 13: Öffnung
- 14: Trommelgehäuse
- 15: Öffnung
- 16: Tür
- 17: Schwenkachse
- 18: Grundrahmen
- 19: Fuß
- 20: Gewichtsaufnehmer
- 21: Unterseite
- 22: Schraube
- 23: Traverse
- 24: Gewindestange
- 25: Ende
- 26: Entladeband
- 27: Obertrum
- 28: Führungswand
- 29: Förderrichtung
- 30: Ende
- 31: Trockner

## Patentansprüche

1. Verfahren zum Aufteilen eines in einer Wäschereimaschine behandelten Postens an Wäsche in mehrere Teilposten, **dadurch gekennzeichnet, dass** das Gewicht der Wäsche in der Wäschereimaschine vor oder zu Beginn des Entladens der Wäsche aus der Wäschereimaschine ermittelt wird und das Gewicht des in der Wäschereimaschine noch enthaltenen Teils des Postens der Wäsche während des Entladevorgangs fortlaufend ermittelt wird, wobei zur Bildung eines entladenen Teilpostens mit einem bestimmten Gewicht an Wäsche eine solche Menge an Wäsche entladen wird, bis die fortlaufende Ermittlung des Gewichts der in der Wäschereimaschine verbleibenden Wäsche ergeben hat, dass dieses Gewicht der Wäsche dem vorher ermittelten Gewicht des gesamten Postens der Wäsche in der Wäschereimaschine abzüglich des Gewichts des zu bildenden Teilpostens entspricht.

2. Verfahren zum Aufteilen eines in einer Wäschereimaschine behandelten Postens an Wäsche in mehrere Teilposten, **dadurch gekennzeichnet, dass** das Gewicht der Wäsche in der Wäschereimaschine vor oder zu Beginn des Entladens der Wäsche aus der Wäschereimaschine ermittelt wird und das Gewicht des in der Wäschereimaschine noch enthaltenen Teils des Postens der Wäsche während des Entladevorgangs fortlaufend ermittelt wird, wobei zur Bildung zweier gleich schwerer Teilposten eine solche Menge an Wäsche entladen wird, bis das über der Zeit ermittelte Gewicht der in der Wäschereimaschine verbleibenden Wäsche dem halben Gewicht des Postens entspricht.

3. Verfahren nach Anspruch 1 oder 2, **dadurch gekennzeichnet, dass** die Wäsche aus der Wäschereimaschine auf einen Förderer geladen wird, vorzugsweise Teilposten nacheinander von dem Förderer zu einer nachfolgenden Wäschereimaschine transportiert werden, insbesondere der oder jeder nachfolgende Teilposten auf dem Förderer zwischengespeichert wird.

## Claims

1. A method for dividing a batch of laundry which is treated in a laundry machine into a plurality of partial batches, **characterized in that** the weight of the laundry in the laundry machine is determined before or at the beginning of unloading of the laundry from the laundry machine and the weight of the part of the batch of laundry which is still present in the laundry machine is determined continuously during the unloading process, it being the case that in order to form an unloaded partial batch with a specific weight of laundry, such an amount of laundry is unloaded until continuous determination of the weight of the laundry remaining in the laundry machine shows that this weight of the laundry corresponds to the previously determined weight of the entire batch of the laundry in the laundry machine minus the weight of the partial batch to be formed.

2. A method for dividing a batch of laundry which is treated in a laundry machine into a plurality of partial batches, **characterized in that** the weight of the laundry in the laundry machine is determined before or at the beginning of unloading of the laundry from the laundry machine and the weight of the part of the batch of laundry which is still present in the laundry machine is determined continuously during the unloading process, it being the case that in order to form two partial batches of the same weight, such an amount of laundry is unloaded until the weight of the laundry remaining in the laundry machine, which weight is determined over time, corresponds to half the weight of the batch

3. The method as claimed in claim 1 or 2, **characterized in that** the laundry from the laundry machine is loaded onto a conveyor, preferably that partial batches are successively transported from the conveyor to a downstream laundry machine, in particular that the or each subsequent partial batch is intermediately stored on the conveyor.

## Revendications

1. Procédé pour partager en plusieurs lots partiels un lot de linge traité dans une machine de blanchisserie, **caractérisé en ce que** le poids du linge dans la machine de blanchisserie avant le déchargement du linge hors de la machine de blanchisserie ou au début de ce déchargement est déterminé, et le poids de la partie du lot de linge qui est encore contenue dans la machine de blanchisserie est déterminé en continu pendant l'opération de déchargement, et pour former un lot partiel déchargé présentant un poids défini de linge, une quantité telle de linge étant déchargée jusqu'à ce que la détermination en continu du poids du linge restant dans la machine de blanchisserie ait indiqué que ce poids de linge correspond au poids précédemment déterminé de l'ensemble du lot de linge dans la machine de blanchisserie moins le poids du lot partiel à former.

2. Procédé pour partager en plusieurs lots partiels un lot de linge traité dans une machine de blanchisserie, **caractérisé en ce que** le poids du linge dans la machine de blanchisserie avant le déchargement du linge hors de la machine de blanchisserie ou au début de ce déchargement est déterminé, et le poids de la partie du lot de linge qui est encore contenue dans la machine de blanchisserie est déterminé en continu pendant l'opération de déchargement, et pour former deux lots partiels de même poids, une quantité telle de linge étant déchargée jusqu'à ce que le poids, déterminé au cours du temps, du linge restant dans la machine de blanchisserie corresponde à la moitié du poids du lot.

3. Procédé selon la revendication 1 ou 2, **caractérisé en ce que** le linge provenant de la machine de blanchisserie est chargé sur un convoyeur, de préférence des lots partiels sont transportés tour à tour du convoyeur jusqu'à une machine de blanchisserie suivante, en particulier le ou chaque lot partiel suivant est stocké temporairement sur le convoyeur.
